# EUROPEAN PATENT APPLICATION

(11) **EP 4 738 844 A1**
(43) Date of publication of application: **06.05.2026**
(21) Application number: 25210756.0
(22) Date of filing: 23.10.2025
(51) Int. Cl.: H04N 21/2343, H04N 19/895, H04N 21/236, H04N 21/434, H04N 21/442, H04N 21/466

(54) **IMAGE PROCESSING SYSTEM AND METHOD**

(30) Priority: 30.10.2024 GB 202415961
(71) Applicant: Sony Interactive Entertainment Inc., Tokyo 108-0075 (JP)
(72) Inventor: BARMAN, Nabajeet, London, W1F 7LP (GB); BARAHONA RIOS, Adrian, London, W1F 7LP (GB); ZADTOOTAGHAJ, Saman, London, W1F 7LP (GB); BIGOS, Andrew, London, W1F 7LP (GB)
(74) Representative: D Young & Co LLP

(57) **Abstract**

A method of image streaming, comprises receiving at least a first stream comprising video packet data and separate supplementary packet data, upon failure to receive video packet data, providing as inputs to a generative model one or more last video images, and data based on currently received supplementary packet data, receiving from the generative model a predicted image, being an estimate of a current missing video image based on these inputs, and outputting the predicted image for display.

## Description

The present invention relates to an image processing system and method.

Streaming systems typically stream content from a source (e.g. at a server) to a client device, over a network such as the internet. A large proportion of the transmitted data is video data, making it vulnerable to interruptions that result in packet corruption or loss. When video packet loss or corruption result in the loss of a video image, this can be compensated for by known techniques for frame prediction. However, the prediction is typically fairly approximate and only for the next image frame.

If the packet loss or corruption is such that successive video images are lost or unusable, then typically this error cannot be masked by the client. One solution is to buffer the received data and request retransmission of lost packets to patch the buffered data as needed; however for typical video frame rates and network latencies, this will require the buffering of a significant number of video frames, and hence require a significant provision of and use of memory. Meanwhile for certain content, such as streamed videogames and other interactive content, the delay created by buffering the video is unacceptable.

The present invention seeks to mitigate or alleviate this problem.

### SUMMARY OF THE INVENTION

Various aspects and features of the present invention are defined in the appended claims and within the text of the accompanying description.

In a first aspect, a method of image streaming is provided in accordance with claim 1.

In another aspect, a client device is provided in accordance with claim 13.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of a client device in accordance with embodiments of the present description.
- Figure 2 is a schematic diagram of a client system for generating output images in accordance with embodiments of the present description.
- Figure 3 is a flow diagram of a method of generating output images in accordance with embodiments of the present description.

### DESCRIPTION OF THE EMBODIMENTS

An image processing system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

### Client device

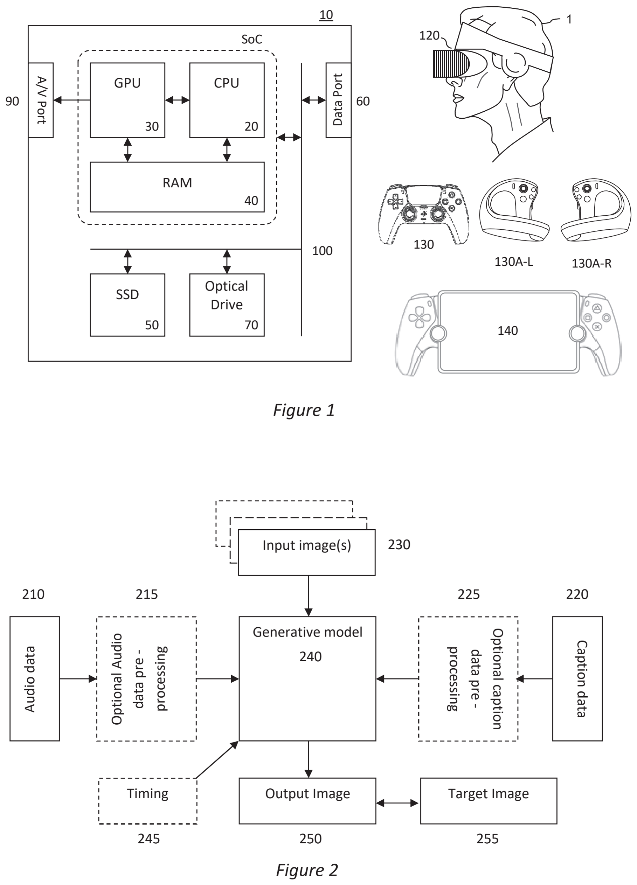

Referring now to the drawings, wherein like reference numerals designate identical or corresponding parts throughout the several views, Figure 1 illustrates an entertainment system 10 such a computer or console. The entertainment system may operate as client device for a video streaming service.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC). Further storage may be provided by a disk 50.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70. Audio/visual outputs from the entertainment device are typically provided through one or more A/V ports 90 or one or more of the data ports 60. Where components are not integrated, they may be connected as appropriate either by a dedicated data link or via a bus 100.

Examples of a device for displaying images output by the entertainment system include a head mounted display 'HMD' 120 worn by a user 1, a TV (not shown), and a portable screen 140.

Interaction with the system is typically provided using one or more handheld controllers 130, 140, and/or one or more VR controllers (130A-L,R) in the case of the HMD.

Whilst a console-like system is illustrated, it will be appreciated that any suitable client streaming device may be considered, such as a phone or tablet, or a smart TV. Hence such aspects as the display and input controls may vary with the device and may be separate or integral as appropriate.

### Compensating for video packet loss

Known techniques for frame prediction may include extrapolation from the preceding last image or images received at the client.

Alternatively, it is possible to predict the next image using a generative model. Recent generative models such as generative adversarial networks (GANs), variational autoencoders (VAEs), large language models (LLMs), and more recently diffusion models, have found great success in the field of image synthesis.

However, such systems also have a tendency to 'hallucinate', generating results that diverge from expectation. This tendency becomes more acute if the system comprises a feedback loop, using part of its own output as a future input so that hallucinations become incorporated into, or if it is asked to predict an outcome many time steps separate from the input.

This in turn makes it difficult for such generative models to produce image sequences that are consistent over time.

This limits their ability, for example, to error mask in the case of streaming video data (whether films or TV, or cloud gaming); in this case, packet loss and/or bandwidth drop can result in the loss of a series of frames, which are difficult to interpolate or extrapolate without hallucinatory divergence from the lost images. For a passive application such as film or TV, this can result in odd imagery that disrupts enjoyment of the content. Meanwhile for an active application such as cloud gaming, it can mean that the player is reacting to features that are not actually in the game, or missing features that are, or aiming at/avoiding objects that are depicted inaccurately.

As a result, in order to use a generative model to cover for the loss of a video feed it would be desirable to improve generative interpolation and/or extrapolation at a client device so as to extend the number of frames for which it can output substitute images that are within a given level of visual divergence from the missing source material.

### Generative model

Typically, a generative Al system learns patterns and structures in its input training data, in order to then generate new output data which exhibits similar characteristics to the training data. Each of the input training data and output data may comprise various types of data, such as video, text, or audio. For example, the generative Al system may learn patterns in input training images, and then generate images that have similar characteristics.

A generative Al system may generate output data based on an input prompt. Like the training and output data, the prompt may comprise various types of data, such as images, video, text, or audio. The prompt may be of the same or different data type to the model's training and/or output data. For example, the input prompt may comprise text and the output data may comprise an image (e.g. matching an input text description of a desired image), or the input prompt may comprise an image and the output data may comprise audio data (e.g. with a theme matching the input image).

A generative Al system may comprise a generative model trained to learn a probability distribution of the input training data, and generate new output data based on this learned distribution. For example, for a set of data instances / observable variables (X) and a set of labels / target variables (Y) in the training data set, the generative model may learn a joint probability distribution of data instances and labels p(X,Y), and/or a probability distribution of the data instances p(X) (for example where no labels are available).

Example suitable generative models for learning a probability distribution of the input training data include Variational Autoencoders (VAEs), transformer-based models, diffusion models (e.g. denoising diffusion probabilistic models (DDPMs)), Reinforcement Learning (RL), and Generative Adversarial Networks (GANs). The choice of generative model may depend on the specific task performed by the generative Al system.

A generative model may comprise one or more artificial neural networks. For example, a Variational Autoencoder (VAE) may comprise a pair of neural networks acting as an encoder and a decoder to and from a reduced (i.e. latent space) representation of the training data respectively, and a Generative Adversarial Network (GAN) may comprise a first 'generator' neural network that generates new data and a second 'discriminator' neural network that learns to discriminate between generated data and real data. The one or more constituent neural networks of the generative model may be trained together or separately.

During training a generative model may adjust its internal parameters (e.g. neural network weights) so as to optimize (e.g. minimize) a loss/error function, aiming to minimize discrepancy between the generated output data and desired output data. It will be appreciated that the specific loss function, and algorithm used to optimize the function may vary depending on the nature of the generative model, and its intended application. For example, a mean squared error loss function may be used for an image generation task, and a cross-entropy loss function may be used for a text generation task. These loss functions may be optimized using various existing optimization algorithms, such as gradient descent.

Once trained, the generative model may be used to generate new output data based on an input prompt. The input prompt may be provided by a user, or by an appropriate device (e.g. using an application programming interface (API)). Thus, the generative Al system allows generating new content (e.g. images, text, or audio) based on only a prompt and without requiring detailed instructions for doing so.

Turning now to Figure 2, in embodiments of the present description, a generative model (240) such as a diffusion/VAE/LLM model is trained to produce successive output video frames (250) based on one or more preceding input video frames (230).

Notably however, it also receives data based on audio (210, 215) corresponding to the missing frames, and/or caption data (220, 225) corresponding to the missing frames. The audio and/or caption data provide a current guidance / constraint on the generative model that serves to limit its scope for divergence from the actual missing video images.

For the common use case of dropped streaming video packets, it is therefore preferable that the audio and/or caption data is contained in separate packets to the corresponding video; either in a separate packet stream, or by including such data in advance of the corresponding images by a predetermined offset within the video stream (for example one determined empirically from typical packet drop durations, either service-wide, as a function of current bandwidth, or for the particular client, in order of specificity).

In this way, if a given video packet is dropped, then audio and/or caption data is still available, in principle. If a series of video packets is dropped, the audio/caption data will remain available if these are in a separate packet stream, or for as long as the advance period if included within the video packet stream.

For passive content such as pre-recorded film and TV, and optionally for videogame cut-scenes, the separate audio and/or caption data can optionally also be sent significantly in advance, e.g. far enough in advance to re-send any dropped audio/caption packets as well, so that this backup scheme itself has the opportunity to be repaired. However much audio and/or caption data is provided in advance can be cached at the client device, for example in RAM 40.

For active content such as in cloud gaming, it is more difficult to provide audio and/or caption data in advance (except possibly for cut-scenes), as the audio is responsive to the current game state, which itself is interactive and hence hard to predict. It is possible to predict some audio (particularly for environmental sounds and non-player characters) but this will only be part of the audio state of the game, and is also likely to require modification to the game code so that it outputs at least these part of the audio in advance of normal timing.

However, it is preferable for the techniques herein to be transparent to the game (or other content) being streamed, and to work without the need to modify the game.

This could be achieved by delaying the video output and sending the audio first (either on a separate stream or within the video feed as described above), but again in video games such delay is unwelcome.

Accordingly in this case it would be preferable for the audio/caption data to be provided in a separate packet stream or another data stream, with suitable timing or frame data to allow synchronisation with received video at the client. Optionally where packet priority is implemented, the audio/caption packets should have a higher priority than the video packets.

Typically in the event of network congestion, the larger video data will be affected more than the smaller audio. Similarly for random external errors, these are more likely to affect larger sets of data than smaller sets. Hence typically the audio data can be assumed to be more robust than the video data in adverse network conditions, and survive to reach the client even if video packets are dropped. Similarly caption data is smaller yet, and can be assumed to be correspondingly more robust. Optionally the current caption data can be included as metadata in every packet, or every Nth packet for which it would apply, making it more robust yet.

### Training

Turning again to Figure 2, the generative model 240 can be generalised (i.e. trained on a wide variety of source material in order to output images at inference largely independent of source), or can be more specific, for example trained on video games, or only on video games of a certain genre (where certain graphical tropes are likely to be repeated), or only on videogames of a certain series (where certain graphical assets are also likely to be similar across titles) or only on a certain game, or region / chapter / section of a game, so as to be more specifically tuned to the content. It will be appreciated that in practice the generative model may first be trained on more general material (e.g. at a general or genre level), and this model can then be fine-tuned using the more specific material.

The generative model is trained (or training is refined) on video footage together with audio and / or caption data. The video images or frames (hereafter, simply 'images'), can be thought to each occur at a time t_{N}, where N corresponds to a time instant or corresponding frame number.

In particular, one or more images are provided as input to the model, optionally with separate time stamp or frame number/count data (not shown). The or each input image represents the last image(s) received prior to a video packet drop. These inputs can be referred to as t₀, t₋₁, t₋₂, etc. Having several prior images as input can help with predicting movement and change within future images, as this information is exemplified by the sequential inputs.

In one embodiment of the present description, these input images remain the same during the course of the extrapolation inference process. In another embodiment, they are updated as described later herein.

In addition, the model receives audio and/or caption data. The audio and/or caption data corresponds to the next (lost) image, e.g. at t₁. Optionally again explicit time stamp or frame number/count data (not shown) can be provided in association with this audio and/or caption data.

Finally, optionally the model may receive explicit current frame count / timing data 245, indicating the intended timing of the image to predict (e.g. in this case t₁). It may alternatively or in addition be part of the audio and/or caption data as noted above.

The model then receives, as target output data 255 for training, the actual image at t₁.

The model attempts to output the image at t₁ based on the image at t₀ (and optionally earlier images) plus the audio / caption data at t₁ (i.e. corresponding in time to the target image). During training, the error between the model's estimate 250 and the ground truth 255 of the target is propagated back through the model to update it, according to the scheme of the particular generative model.

Depending on up to how many images the model is expected to extrapolate for, this process can be repeated with input audio and/or caption data for time t₂ and the target image for t₂, and then for t₃, t₄, and so on.

In this way, the model learns to predict the current image based on the (increasingly out of date) last known image(s), and the current audio and/or caption data.

Optionally, the context provided by the audio and/or caption data can be improved, to in turn improve the predictive capability of the generative model.

In particular, for image t_{N}, the audio for t_{N}, t_{N-1}, t_{N-2}, etc. can be provided, for example as a fixed window of M=2,3,4, etc. frames' worth of audio. Hence for the frame at t₁, the audio for t₁ and for the last known frame t₀, and optionally the audio for earlier frames t₋₁, t₋₂, etc., may be provided to assist the model in generating the image at t₁. Then for the image at t₂, the audio is available for t₂, t₁, t₀, etc.; in other words, the context of the audio can include audio for prior images, thereby providing additional continuity between image predictions.

Further optionally, the audio may include audio for one or more future image frames as well; hence for image t₂, the audio data may relate to the images at t₄, t₃, t₂, t₁, t₀. This latter enhancement is likely to only be possible for where the audio can be received ahead of when the video is meant to be output.

In any event, the audio data and/or the caption data act as the current context prompt to enable the model to extrapolate from the last known image(s) to the current image, whether the audio data and/or the caption data relate only to the current image, or to a wider context corresponding to multiple images.

As noted previously, in an embodiment of the description, the input images themselves can also be updated. In this case, the last output predicted image is treated as being the most recently known image, and provided as part of the input to the model for the next image. Hence in the example above, inputs for images at t₀, t₋₁, t₋₂, used to generate the image at t₁, are shifted along so that the input to generate the image at t₂ is t₁, t₀, t₋₁.

Optionally the number of images input to the model may be up to as many as the number of images the model is expected to extrapolate for, so that the last actual image remains in the input set. However typically this would result in a very large input, even if the images were simplified or abstracted first (as may typically be the case). Hence in practice if the input images only correspond to two or three images, then the original last known may be lost after a few frames of extrapolation. Optionally, only one image is provided as input, in which case if replaced it would be with the most recent output predicted image.

Hence if the input image(s) are updated, the model can use its own previous predictions as input for future predictions, guided as it is by the actual audio and/or caption data for the relevant time step. However optionally the original last known image can be kept as a special input, whilst the last predicted image(s) are also provided. Optionally in this case to maintain a consistency for the model when training and inferencing, the earliest of the last known input images can be kept, so that for the first couple of predictions the next couple of real images can be treated by the model in a similar manner to the subsequent predictions that replace them.

Hence again the generative model can use the audio data and/or the caption data as the current context prompt to enable the model to extrapolate from the previous image(s), which now may be either from the last known image(s) and/or from previously predicted images.

The generative model can thus be trained using footage of a videogame (or any desired content) to predict/extrapolate images from last known image(s) using current audio/caption data as guidance, by learning how the audio/caption data correlates with changes in the target images over time. The image inputs can retain the last known real image, or can be replaced by or supplemented with subsequently predicted images.

The trained generative model can provide predicted images that are acceptably close to the true, lost, images for a longer period than if there was no current contextual data available, and can predict several seconds of lost images, corresponding to tens if not hundreds of images.

### Audio inputs

As noted elsewhere herein, the generative model uses audio data inputs corresponding to the current image frame to be generated, and optionally audio data inputs corresponding to previous image frames and possibly also future frames, depending on availability.

Notably, the audio data may simply be a time series of audio (for example simple stereo audio, or a stereo signal combined as mono audio). However alternatively or in addition, the audio may be pre-processed by and optional audio pre-processor 215. In particular, the audio may be transformed into the frequency domain (e.g. using an FFT). Optionally this can be weighted to highlight speech frequencies (a so-called mel-spectrum)

An FFT spanning multiple frames of audio would be a so-called spectrogram, and may be input to the generative model effectively as a further image. Further information may be provided by performing an FFT on the FFT to generate a so-called cepstrum (or mel-cepstrum as appropriate); this highlights the spectral structure of the sound whilst removing the mode variable pitch harmonics that form it; hence the cepstral representation of a word like 'one' is more consistent between different speakers than the spectral representation.

Optionally (for example for stereo audio) spectra or cepstra for each channel may be generated separately, and provided separately. Optionally, they may be provided as separate greyscale value images, and further optionally several may be provided stacked together as an image in respective colour channels of an RGB image. Hence an N-channel spectrogram could be presented using one or more colour images, with respective spectrogram channels in respective colour channels. More generally they may be provided in a similar data format to the input images, as this may assist the model in making correlations without the need to learn internal conversions of representation or accommodate them. The resulting audio representation can be encoded / input separately to the image data, and the audio and image encoded latents could be used jointly to train the model.

Other pre-processing may be considered, such as noise reduction, volume normalisation, and the like, to assist the model in determining relevant correlations between audio prompts and the target images.

Optionally in addition, the audio may be provided to a speech recognition system to generate corresponding text (where this is not already provided by caption data). This may be of particular use if the generative model comprises or is based on a large language model that is particularly tuned to text prompts.

Hence the generative model may receive one or more forms of audio data, including the original time series optionally normalised and/or noise reduced, timing data, frequency data (spectrum and/or cepstrum data), and transcript data.

Notably, by using audio and/or audio-derived data in conjunction with prior image data to train and prompt the model, it's predicted images are more likely to be synchronised with the received audio as played back to the user.

### Caption inputs

Most modern media, including games, includes caption data. The caption data typically comprises, at a minimum, dialogue text and timing data related to when it should be displayed. The caption data may also differentiate who was talking. This information can assist the model, for example with centring the image on the relevant speaker.

Descriptive caption data may also include captions relating to other audio, such as [birds signing] or [gunshots], or other environmental audio. Such event-related audio captions can also assist the model.

In this case, just as the audio may be used to generate text, optionally the caption data can be used to generate audio; for example using text-to-speech. This may be helpful where the system uses audio as a prompt, but an audio packet has also been lost.

Alternatively or in addition to generating speech other optional caption pre-processing 225 may be performed. This may include stemming words to a root word to reduce variability, and tokenising certain words or terms (e.g. hit, punch, slap could all be tokenised as a generic 'hit' to assist the model with correlation). Similarly, description captioning such as 'gun fire' and 'gunshots' could be tokenised to 'shot' or similar. Furthermore, dialogue and descriptive caption data could be provided separately to the model to better indicate their different descriptive functions in respect of the missing image.

Hence the generative model may receive one or more forms of caption data, including the original caption data, stemmed and/or tokenised data, in one or two streams, and/or as synthesised audio data.

### Returning to stream

At some point, video packets will be received again, and the client can start displaying the actual images streamed from the server.

Optionally, the client can compare a predicted image with the first actual newly received image, to estimate how much the extrapolations have diverged from the actual images.

This may be an absolute difference measure, optionally at a reduced resolution, which is then compared with a first threshold. If the difference is below the first threshold, then the client can switch directly to the newly received image, with little visual discontinuity.

Optionally however, if the difference is above that threshold, then the system may interpolate between the extrapolated image and the actual image, for one or more frames, to more gently segue from the extrapolated images to the actual images. This interpolation may be a simple weighted averaging, with the weight shifting from the extrapolated images to the actual images over successive frames. In this case where the model uses the last output frame as a subsequent input, then the averaged image may be used instead to assist with steering the model towards convergence with the actual image.

Alternatively, the interpolation may use the model itself, or a variant thereof.

In this case, the model is interpolating rather than extrapolating, and the future actual image is also available. Hence in this case, if the current image is, for example tₚ, then the inputs may be tₚ₋₁ and tₚ. , where tₚ₋₁ was the last extrapolated image and tₚ is the actual current image. The model will then generate an output in response to both images (optionally in this case without audio and/or caption inputs, particularly if a different generative model is trained for this specific purpose), in effect interpolates between them. This interpolation tₚ' may then be used instead of the actual current image as a transitional image between the generated and actual images. Then tₚ' may then be used as the old input for the next interpolation with the following actual image, which will result in an interpolation that is closer to the following actual image. This process can continue until the interpolated image differs from the actual image by less than the first threshold, at which point the client switches back to the actual image stream.

In this way, the system can provide a soft landing for the user as it transitions from extrapolated images to the actual images again, if the extrapolation has diverged from the actual imagery by more than a threshold amount. The threshold itself may be based on empirical measurements of user-noticeable image jumps or the like.

It will also be appreciated that the interpolation approach can be used more generally for example if a data packet loss or corruption results in the loss of an individual frame; the extrapolation model can immediately start to generate images, but when the next actual image is obtained, the system can either switch back (since, after only one image, the extrapolation is typically accurate), but if something critical happened in that frame, such as an explosion, and the model extrapolated incorrectly, then interpolation can be used to smooth out the difference.

Alternatively, if an image is corrupted or lost so that it can't be displayed, then the client could wait for one frame to determine if the stream is restored, and if so then interpolate the missing image and continue.

### Server

The server providing video, audio and optionally caption data may be a substantially conventional server, but preferably configured to provide audio in separate packets and/or a separate stream to the video, so that in the event of a lost video packet or packets, the audio packets may still be received.

The server may also be configured to inject duplicates of caption data into more packets than it normally would, to provide a robust backup option for the client's generative model.

The server may also prioritise requests to re-send audio packets over video packets, optionally in conjunction with a flag in the request from the client indicating that the audio will be used for the generative model to fill in missing video.

### Variant embodiments

Generative models can be computationally complex. To simplify this, optionally the input images are downscaled to a lower resolution, as is the target image and consequent output image. This reduces the footprint of the generative model by reducing the number of inputs, and also makes it easier to generate images at the original frame rate, or at an acceptable framerate such as 30fps or 60fps.

The resolution can be reduced by an amount that results in the trained generative model fitting within a predetermined footprint, such as that provided by a dedicated neural engine of the client device, or a graphics processor of the client device.

The output may be upscaled to the original resolution, for example using any suitable upscaling scheme, including machine learning based upscaling schemes.

The client may notify the user of the client device when it switches to generative extrapolation of images. For example it may overlay an 'Al' icon in a corner of the image. The Al icon may fade in with successive extrapolated images, visually indicating how by how much the Al is having to extrapolate from old data or its own previous estimates.

A benefit of this is that the user can understand that the images they are seeing may not wholly correspond to the game state at the cloud gaming server; for example, the user may elect to avoid trying for a headshot and aim for the body of an enemy because there is a better chance of hitting the enemy's body than their head, if the image is merely an extrapolation of what might be happening in the game at that moment.

Similarly, for multiplayer games, an administrative server coordinating the game may be notified that a client device is using a generative model, and for example apply an auto-aim compensation to that client during this period (or instruct the cloud instance of the game corresponding to that client to do so). Optionally the compensated aim error margin can increase as the period increases, up to a threshold. Other players may be notified of this occurring. Optionally, for competitive games such as e-sports, such a facility could be disabled.

Alternatively or in addition to using audio and/or caption data, other data to guide the generative model may be provided in packets other than the video packets. Hence for example within audio packet data and/or caption packet data, or separately to both, micro-image data may be included.

For example if video data encodes an HD image at 1920x1080 pixels, a micro-image version of the same image may be 19x11 pixels, and hence comprise 9,900 times less data. If the image was greyscale it would be 27,000 times less data. Meanwhile a micro-image at 38x22 pixels would be 2,500 times smaller, or 7,500 time smaller in grey scale. In practice, the encoding compression of the full image would be greater than that of a micro image (if any compression was even applied) and so these ratios would not be achieved, but a micro image would nevertheless still be around one or two orders of magnitude smaller.

Hence in a variant embodiment of the present description, data for a micro-image of the current video frame is embedded in the audio packet data and/or the caption packet data, or provided separately. The micro-image data may be embedded as metadata, or utilising available format fields. Alternatively it may be embedded in the audio data for the client device to extract. For example the data could be included using known audio watermarking techniques, or using portions of the audio data that can be overlooked or concealed when reconstructed. The size of the micro image may be any size that can be embedded without unacceptably affecting the streaming performance and/or quality of the original payload, and hence may not be limited to 19x11 or 38x22 pixels

In this way, representations of the lost frames can be received via the audio and/or caption packets (or any other streams being received in parallel with the normal video stream). These representations can be provided to the generative model as part of the training and inference processes to guide the model. In this case, in effect, the generative model can use the detailed information of the last known image(s) to upscale the current micro image to a usable output image (even if this, in turn, is subsequently upscaled). The audio and/or caption data may optionally also be provided as discussed elsewhere herein to provide further guidance/constraint.

Hence more generally, the client device extrapolates a current image from last known image(s) (whether received or in some cases previously predicted), with the extrapolation guided or constrained by supplementary data in a separate packet stream (audio, caption, or other), where the supplementary data is audio data, caption data, and/or micro-image data.

As a further variant, the non-video packet stream may include micro motion-vector data. This may for example comprise one of 16, 32,64, 128, or 256 directions, and one of 16, 32,64, 128, or 256 amplitudes, for each of 19x11 positions or 38x22 positions etc.; this can provide the generative model with information about where and how much each part of the image has moved relative to a prior image, to a degree of detail much greater than a micro image; hence if the original video image has panned left by about 10 pixels between frames, this may not be captured clearly in the micro image, but could be conveyed clearly by micro motion vector data. Similarly a zoom or forward travel between frames would be conveyed by a characteristic set of 'rays' of motion vectors pointing away from the direction of travel / centre of the zoom.

Hence such data can provide additional information, in particular regarding gross motion or rotation of the point of view, that may be harder to discern from the audio alone (which will tend to correlate more strongly with what is being depicted rather than how it is being depicted), from a micro-image, particularly where the inter-image motion is smaller than the subsampling that the micro-image represents.

Finally, in a variant embodiment of the present description, the client device may estimate when the generated images are likely to have diverged sufficiently from the actual images that it would be better to pause the game. This may be a simple duration based estimate. Alternatively, the generative model may also be trained to output an estimate of its own error; during training this would be provided based on the error used to train the image output (e.g. as a total error value), and provided as a further target to the generative model. In either case, this would allow the system to fail gracefully in the event of persistent video packet loss. It will also be appreciated that the client may stop if the supplementary data from separate packets is also lost for more than a predetermined period of time.

### Summary

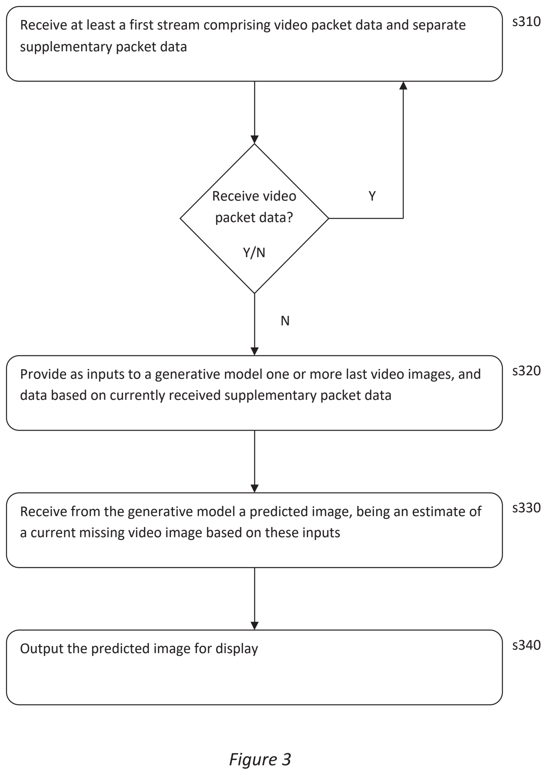

Referring now to Figure 3, in a summary embodiment of the present description, a method of image streaming comprises the following steps.

In a first step 310, receiving at least a first stream comprising video packet data and separate supplementary packet data, as described elsewhere herein. The respective packet types may be in the same stream, or in separate streams (which is likely to be more robust).

Upon failure to receive video packet data, then in a second step s320, providing as inputs to a generative model one or more last video images, and data based on currently received supplementary packet data, as described elsewhere herein.

In a third step s330, then receiving from the generative model a predicted image, being an estimate of a current missing video image based on these inputs, as described elsewhere herein.

And finally in a fourth step s340, outputting the predicted image for display (e.g. via AV port 90 to a separate display, or via bus 100 to an integral display, depending on the client device), as described elsewhere herein.

It will be apparent to a person skilled in the art that variations in the above method corresponding to operation of the various embodiments of the apparatus as described and claimed herein are considered within the scope of the present invention, including but not limited to that:
- the supplementary packet data comprises audio data corresponding to the video stream, as described elsewhere herein;
   - in this case, optionally the audio data is pre-processed to comprise one or more selected from the list consisting of a frequency domain transform of the audio, a frequency domain transform of the audio formatted as at least one colour or greyscale channel of an image of the same kind as the last video image, and a text prompt based on speech to text transcription, as described elsewhere herein;
- the supplementary packet data comprises caption data corresponding to the video stream, as described elsewhere herein;
   - in this case, optionally descriptive caption data and dialogue caption data are provided as separate inputs to the generative model, as described elsewhere herein;
- the supplementary packet data comprises duplicate image data corresponding to the video stream, the duplicate image data being at least an order of magnitude smaller than the image data in the video stream, as described elsewhere herein, and optionally two orders of magnitude smaller or close thereto;
- the supplementary packet data comprises motion vector data corresponding to the video stream, the motion vector data corresponding to a reduced image resolution at least an order of magnitude smaller than that of the image data in the video stream, as described elsewhere herein, and optionally two orders of magnitude smaller or close thereto;
- the one or more last video images comprise one or more selected from the list consisting of those last decoded from the received video stream, and at least one predicted as the previous current image by the generative model, as described elsewhere herein;
- the method comprises the steps of, upon receiving subsequent video packet data, decoding a current image from the received video packet data, comparing the decoded current image with the current predicted image from the generated model, and if a difference between the two images exceeds a threshold, outputting an image based on both images as a replacement intermediate image, as described elsewhere herein;
- the image inputs and outputs of the generative model are at a resolution smaller that the image resolution output for display; and the method comprises the step of upscaling the output of the generative model for output for display, as described elsewhere herein; and
- the generative model was trained on inputs based on video and supplementary data, and on successive ones of a series of target images representing successive lost images following after the input video data representing the last video image, as described elsewhere herein.

It will be appreciated that the above methods may be carried out on hardware suitably adapted as applicable by software instruction or by the inclusion or substitution of dedicated hardware.

Thus the required adaptation to existing parts of an equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, and referring again to Figure 1, in a summary embodiment of the present description, a client device (e.g. entertainment device 10) comprises the following.

A data interface (e.g. data port 60, optionally in conjunction with CPU 20) configured (for example by suitable software instruction) to receive at least a first stream comprising video packet data and separate supplementary packet data, as described elsewhere herein.

An input processor (e.g. CPU 20, optionally in conjunction with a dedicated neural co-processor, not shown, and/or GPU 30) configured (for example by suitable software instruction), upon a failure to receive video packet data, to provide as inputs to a generative model one or more last video images, and data based on currently received supplementary packet data, as described elsewhere herein.

An output processor (e.g. CPU 20, optionally in conjunction with a dedicated neural co-processor, not shown, and/or GPU 30) configured (for example by suitable software instruction) to receive from the generative model a predicted image, being an estimate of a current missing video image based on these inputs, as described elsewhere herein.

And, a display processor (e.g. GPU 30, optionally in conjunction with CPU 20 and/or A/V port 90 or bus 100) configured (for example by suitable software instruction) to output the predicted image for display (either to an external or integral display, as appropriate), as described elsewhere herein.

Instances of this summary embodiment implementing the methods and techniques described herein (for example by use of suitable software instruction) are envisaged within the scope of the application, including but not limited to that the supplementary packet data comprises one or more selected from the list consisting of audio data corresponding to the video stream, caption data corresponding to the video stream, duplicate image data corresponding to the video stream, the duplicate image data being at least an order of magnitude smaller than the image data in the video stream, and motion vector data corresponding to the video stream, the motion vector data corresponding to a reduced image resolution at least an order of magnitude smaller than that of the image data in the video stream.

As noted elsewhere herein, the client may interact with the server when video packets are not properly received, for example to indicate that the client is entering a prediction mode (which may be relevant for multiplayer games) and also to request supplementary data packets with a higher priority to improve the chance of supply, or to retransmit lost supplementary data packets.

Accordingly, in a summary embodiment of the present description, a system comprises the client device as described elsewhere herein, configured to request a retransmission of supplementary data if supplementary data packets are lost, and a server (not shown), configured to prioritise retransmission of such supplementary data packets, as described elsewhere herein. Optionally the server prioritises transmission and/or retransmission of supplementary data packets when notified by the client that it has entered a prediction mode, and alternatively or in addition, seeks to send new video packets via a different route to the user, at least temporarily, in an attempt to restore the stream quickly. This latter rerouting may only be attempted once the packets have failed to be received for a predetermined period of time.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method of image streaming, comprising:
receiving at least a first stream comprising video packet data and separate supplementary packet data;
upon failure to receive video packet data,
providing as inputs to a generative model one or more last video images, and data based on currently received supplementary packet data;
receiving from the generative model a predicted image, being an estimate of a current missing video image based on these inputs; and
outputting the predicted image for display.

2. The method of claim 1, in which the supplementary packet data comprises audio data corresponding to the video stream.

3. The method of claim 2, in which the audio data is pre-processed to comprise one or more selected from the list consisting of:
i. a frequency domain transform of the audio;
ii. a frequency domain transform of the audio formatted as at least one colour or greyscale channel of an image of the same kind as the last video image; and
iii. a text prompt based on speech to text transcription.

4. The method of any preceding claim, in which the supplementary packet data comprises caption data corresponding to the video stream.

5. The method of claim 4, in which descriptive caption data and dialogue caption data are provided as separate inputs to the generative model.

6. The method of any preceding claim, in which the supplementary packet data comprises duplicate image data corresponding to the video stream, the duplicate image data being at least an order of magnitude smaller than the image data in the video stream.

7. The method of any preceding claim, in which the supplementary packet data comprises motion vector data corresponding to the video stream, the motion vector data corresponding to a reduced image resolution at least an order of magnitude smaller than that of the image data in the video stream.

8. The method of any preceding claim, in which the one or more last video images comprise one or more selected from the list consisting of:
i. those last decoded from the received video stream; and
ii. at least one predicted as the previous current image by the generative model.

9. The method of any preceding claim, comprising the steps of:
upon receiving subsequent video packet data,
decoding a current image from the received video packet data;
comparing the decoded current image with the current predicted image from the generated model; and
if a difference between the two images exceeds a threshold,
outputting an image based on both images as a replacement intermediate image.

10. The method of any preceding claim, in which:
the image inputs and outputs of the generative model are at a resolution smaller that the image resolution output for display; and the method comprises the step of:
upscaling the output of the generative model for output for display.

11. The method of any preceding claim, in which:
the generative model was trained on inputs based on video and supplementary data, and on successive ones of a series of target images representing successive lost images following after the input video data representing the last video image.

12. A computer program comprising computer executable instructions adapted to cause a computer system to perform the method of any one of the preceding claims.

13. A client device, comprising
a data interface configured to receive at least a first stream comprising video packet data and separate supplementary packet data; and
an input processor configured, upon a failure to receive video packet data, to provide as inputs to a generative model one or more last video images, and data based on currently received supplementary packet data;
an output processor configured to receive from the generative model a predicted image, being an estimate of a current missing video image based on these inputs; and
a display processor configured to output the predicted image for display.

14. A client device according to claim 13, in which
the supplementary packet data comprises one or more selected from the list consisting of:
i. audio data corresponding to the video stream;
ii. caption data corresponding to the video stream;
iii. duplicate image data corresponding to the video stream, the duplicate image data being at least an order of magnitude smaller than the image data in the video stream; and
iv. motion vector data corresponding to the video stream, the motion vector data corresponding to a reduced image resolution at least an order of magnitude smaller than that of the image data in the video stream.

15. A system, comprising:
a client according to claim 13 or claim 14, configured to request a retransmission of supplementary data if supplementary data packets are lost; and
a server, configured to prioritise retransmission of such supplementary data packets.
